# EUROPÄISCHE PATENTANMELDUNG

(11) **EP 2 733 862 A1**
(43) Veröffentlichungstag der Anmeldung: **21.05.2014**
(21) Anmeldenummer: 13450048.7
(22) Anmeldetag: 14.11.2013
(51) Int. Cl.: H04B 5/00, G07C 9/00

(54) **Datenübertragungsvorrichtung**

(30) Priorität: 14.11.2012 AT 12112012
(71) Anmelder: Evva Sicherheitstechnologie GmbH, 1120 Wien (AT)
(72) Erfinder: Enne, Reinhard J., A-1120 Wien (AT); Prenner, Lukas, A-1180 Wien (AT)
(74) Vertreter: Keschmann, Marc

(57) **Zusammenfassung**

Bei einer Datenübertragungsvorrichtung umfassend wenigstens eine erste Sende- und/oder Empfangseinrichtung, um eine Datenübermittlung zwischen der Sende- und/oder Empfangseinrichtung und einer zweiten Sende- und/oder Empfangseinrichtung zu ermöglichen, weist die erste Sende-und/oder Empfangseinrichtung ein wenigstens eine Koppelelektrode (11) aufweisendes kapazitives Datenübertragungsmodul (9) auf, sodass die Datenübermittlung über eine kapazitive Kopplung zwischen der ersten Sende- und/oder Empfangseinrichtung und der zweiten Sende-und/oder Empfangseinrichtung erfolgen kann. Das Datenübertragungsmodul (9) weist wenigstens eine Modulations- und/oder Demodulationsschaltung zum Aufmodulieren von Daten auf ein Trägersignal bzw. zum Demodulieren von Daten aus einem Signal auf, wobei das kapazitive Datenübertragungsmodul (9) wenigstens einen die Modulations- und/oder Demodulationsschaltung aufweisenden Mikrochip (15) umfasst, der zum Modulieren bzw. Demodulieren von Daten mittels wenigstens eines vorzugsweise digitalen Modulationsverfahrens ausgebildet ist. Der Mikrochip (15) ist ein für die drahtgebundene Datenübertragung, insbesondere eine Datenübertragung über eine Trägerfrequenzanlage für Stromnetze (powerline communication), oder für Funkanwendungen, insbesondere Radaranwendungen ausgebildeter Datenübertragungs-Mikrochip.

## Beschreibung

Die Erfindung betrifft eine Datenübertragungsvorrichtung umfassend wenigstens eine erste Sende- und/oder Empfangseinrichtung, um eine Datenübermittlung zwischen der ersten Sende- und/oder Empfangseinrichtung und einer zweiten Sende- und/oder Empfangseinrichtung zu ermöglichen, wobei die erste Sende-und/oder Empfangseinrichtung ein wenigstens eine Koppelelektrode aufweisendes kapazitives Datenübertragungsmodul aufweist, sodass die Datenübermittlung über eine kapazitive Kopplung zwischen der ersten Sende-und/oder Empfangseinrichtung und der zweiten Sende- und/oder Empfangseinrichtung erfolgen kann, wobei das Datenübertragungsmodul wenigstens eine Modulations- und/oder Demodulationsschaltung zum Aufmodulieren von Daten auf ein Trägersignal bzw. zum Demodulieren von Daten aus einem Trägersignal aufweist, wobei das kapazitive Datenübertragungsmodul wenigstens einen die Modulations- und/oder Demodulationsschaltung aufweisenden Mikrochip umfasst, der zum Modulieren bzw. Demodulieren von Daten mittels wenigstens eines digitalen Modulationsverfahrens ausgebildet ist.

Datenübertragungsvorrichtungen der eingangs genannten Art sind beispielsweise Zutrittskontrollvorrichtungen, mit denen ein Verfahren zur Zutrittskontrolle insbesondere in Gebäuden durchgeführt werden kann, bei der eine vorzugsweise bidirektionale Datenübermittlung zwischen einem elektronischen Schlüssel und einer Zutrittskontrollvorrichtung stattfindet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung der Zutritt freigegeben oder verwehrt wird, wobei die Datenübermittlung zumindest teilweise über eine kapazitive Kopplung zwischen dem elektronischen Schlüssel und der Zutrittskontrollvorrichtung erfolgt und die zu übermittelnden Daten auf wenigstens ein Trägersignal aufmoduliert werden.

Vorrichtungen dieser Art für die Anwendung in der Zutrittskontrolle sind beispielsweise aus den Schriften WO 2007/128009 A1, EP 1168678 A1 und WO 00/15931 A1 bekannt geworden. Die kapazitive Datenübertragung funktioniert so, dass die erste Sende-und/oder Empfangseinrichtung ein im Wesentlichen elektrisches Nahfeld erzeugt, über welches die zu übertragenden Daten ausgesendet werden. Durch dieses Feld wird die erste Sende- und/oder Empfangseinrichtung an die diese tragende Person gekoppelt und die Signale werden somit über die Person weitergeleitet. Weiters weist die Empfangseinheit der zweiten Sende- und/oder Empfangseinrichtung wenigstens eine kapazitive Koppelfläche auf, sodass sich bei Berührung der zweiten Sende- und/oder Empfangseinrichtung oder bei Annäherung an diese durch die Person ein Wechselstromkreis schließt und ein Datensignal zur zweiten Sende- und/oder Empfangseinrichtung übermittelt werden kann, welches von der Empfangseinheit erfasst wird. Die kapazitive Datenübertragung hat im Anwendungsfall der Zutrittskontrolle zur Folge, dass der elektronische Schlüssel selbst nicht in unmittelbare Nähe zum Empfänger der Schließeinrichtung gebracht werden muss und es bedarf keiner benutzergesteuerten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl. Die zu übertragenden Daten können hierbei auf eine vom elektronischen Schlüssel generierte Trägerfrequenz aufmoduliert werden.

Die Bedienerfreundlichkeit der Zutrittskontrolle wird dadurch wesentlich erhöht und es wird überdies sichergestellt, dass eine Datenübertragung lediglich dann erfolgt, wenn die den Schlüssel tragende Person sich der Schließeinrichtung nähert oder diese berührt, sodass Manipulationsmöglichkeiten durch Dritte nahezu ausgeschlossen sind.

Unter elektronischen Schlüsseln werden nachfolgend unterschiedliche Ausbildungen von Identmedien verstanden, die einen elektronischen Code bzw. Identifikationsdaten gespeichert haben, z.B. in der Form von Karten, Schlüsselanhängern und Kombinationen aus mechanischen und elektronischen Schlüsseln.

Die kapazitive Datenübertragung kann auch für die Messdatenübertragung im Zuge der Messwertefassung von Nutzen sein. In der Messtechnik versteht man unter Datenerfassung die Aufnahme analoger Signale mittels geeigneter Hardware. Hierbei werden mit Hilfe eines Analog-digital-Umsetzers digitale Messdaten erzeugt, die dann mittels einer geeigneten Lesevorrichtung sofort ausgelesen oder für ein späteres Auslesen in einem Speicher der Messdatenerfassungseinheit gespeichert werden. Neben der unidirektionalen Messdatenauslesung unterstützen manche Messdatenerfassungseinheiten auch die Möglichkeit einer bidirektionalen Datenübertragung, bei welcher zusätzlich Daten von einer Lese- und/oder Schreibeinheit in die Messdatenerfassungseinheit geschrieben werden, z.B. für Programmierungszwecke oder um komplexere Datenübertragungsprotokolle zu realisieren. Komplexere Datenübertragungsprotokolle können beispielsweise kryptographische Funktionen ermöglichen, insbesondere eine verschlüsselte Datenübertragung und/oder eine gegenseitige Authentifizierung.

Die vorliegende Erfindung bezieht sich insbesondere auf Messdatenerfassungseinheiten, die am Ort der Messdatenerfassung verbaut sind. Solche Messdatenerfassungseinheiten können sich an schwer zugänglichen Stellen befinden, sodass das händische Auslesen der Messdaten erschwert wird.

Nachteilig bei der kapazitiven Datenübertragung ist, dass keine standardisierten Bauteile zur Verfügung stehen, mit denen die kapazitive Datenübertragung in einfacher und kostengünstiger Weise realisiert werden kann. Dies ist insbesondere damit zu erklären, dass die Nutzung von kapazitiven Datenübertragungssystemen insbesondere bei schließtechnischen Einrichtungen bisher nur in sehr begrenztem Ausmaß kommerziell verfügbar gemacht wurde, sodass sich die Entwicklung von Großserienmodellen von Datenübertragungsmodulen bisher nicht gelohnt hat. Dies betrifft insbesondere auch den die Modulations- und/oder Demodulationsschaltung aufweisenden Mikrochip.

Der Erfindung liegt daher die Aufgabe zugrunde, eine Möglichkeit zu finden, mit der die kapazitive Datenübertragung unter anderem bei schließtechnischen Komponenten in einfacher und kostengünstiger Weise baulich realisiert werden kann, wobei es insbesondere wünschenswert wäre, wenn möglichst kleinbauende bzw. miniaturisierte Datenübertragungsmodule zur Verfügung stehen würden. Weiters sollen Modulations- und/oder Demodulationsschaltungen realisiert werden können, die nicht auf ein vorgegebenes Modulations- bzw. Demodulationsverfahren beschränkt sind, sondern die verschiedene, auch komplexere Modulationsverfahren beherrschen, wie z.B. Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK) oder Minimum Shift Keying (MSK).

Zur Lösung dieser Aufgabe sieht die Erfindung bei einer Datenübertragungsvorrichtung der eingangs genannten Art vor, dass der Mikrochip ein für die drahtgebundene Datenübertragung, insbesondere eine Datenübertragung über eine Trägerfrequenzanlage für Stromnetze (powerline communication), oder für Funkanwendungen, insbesondere Radaranwendungen ausgebildeter Datenübertragungs-Mikrochip ist.

Es wurde somit überraschenderweise gefunden, dass Mikrochips, die nicht für die Verwendung bei der kapazitiven Datenübertragung konzipiert wurden, sich für den Einsatz als Teil des Empfangs- und/oder Sendebausteins im kapazitiv arbeitenden Datenübertragungsmodul z.B. einer Zutrittskontrollvorrichtung eignen. Dabei ist es von besonderem Vorteil, dass die erfindungsgemäß zum Einsatz gelangenden Mikrochips in überaus großen Mengen zu sehr geringen Kosten allgemein verfügbar sind. Die mit diesen Mikrochips erzielte Miniaturisierung des Datenübertragungsmoduls erlaubt außerdem den Einbau in Identmedien und Schlösser, wie z.B. Schließzylinder, Beschläge, Betätigungselemente, wie z.B. Knäufe, Drücker und dgl., wobei insbesondere auch eine Nachrüstung bestehender schließtechnischer Einrichtungen ohne weiteres möglich ist. Dadurch wurde eine Möglichkeit gefunden, mit der die kapazitive Datenübertragung in einfacher und kostengünstiger Weise baulich realisiert werden kann, wobei dadurch kleinbauende bzw. miniaturisierte Datenübertragungsmodule zur Verfügung gestellt werden können, wenn auch die restlichen Bauteile der Empfangs- und/oder Sendeeinheit entsprechend miniaturisiert ausgebildet sind. Die erfindungsgemäß einsetzbaren Mikrochips haben weiters den Vorteil, das mit diesen eine Reihe unterschiedlicher Modulations- bzw. Demodulationsverfahren durchgeführt werden können.

Die Erfindung liegt somit in der artfremden Verwendung von für die kontaktbehaftete Kommunikation oder für die elektromagnetische Kommunikation ("Funkkommunikation") vorzugsweise im Fernfeld konzipierten Bauteilen.

PLC-Transceiver (Power Line Communication) bieten beispielsweise die Möglichkeit über OFDM (orthogonales Frequenzmultiplexverfahren) mittels verschiedener Modulationsverfahren, wie z.B. differentielle BPSK (binäre Phasenumtastung), QPSK (Quadraturphasenumtastung), 8-PSK (8-Phasenumtastung), zu kommunizieren. Diese Transceiver bieten weiters den Vorteil, dass bereits Fehler-Detektionsverfahren und eine AES (Advanced Encryption Standard) Verschlüsselung implementiert sind. Beispielsweise seien die folgenden Mikrochips für die PLC-Kommunikation genannt, die für die Verwendung im Rahmen der vorliegenden Erfindung geeignet sind: ST7590 von ST Microelectronics, SM2400 von Semitech oder ATPL220A von ATMEL.

Der Mikrochip AD8333 von Analog Devices sei als Beispiel für einen Demodulator genannt, der vor allem für Radaranwendungen und adaptive Antennen eingesetzt wird.

Weitere Beispiele für Modulatoren und Demodulatoren sind: LTC5598 von Linear Technology, LTC5584 von Linear Technology, LT5517 von Linear Technology, UPC27766GR von NEC, CMX973 von CML Microcircuits.

Der Nachteil einiger der vorgenannten Transceiver liegt in der niedrigen Empfangssensitivität und im hohen Rauschpegel verglichen zu Transceivern, die in der kapazitiv gekoppelten Kommunikation bereits im Einsatz sind. Dies dürfte auch der Grund dafür sein, dass diese Transceiver bislang nicht in der kapazitiv gekoppelten Kommunikation eingesetzt wurden. Um diese Transceiver trotzdem einsetzen zu können, ist es vorteilhaft, wenn das empfangene Signal über einen geeigneten Verstärker geführt wird. Eine bevorzugte Weiterbildung der erfindungsgemäßen Vorrichtung sieht daher vor, dass der Mikrochip unter Zwischenschaltung eines rauscharmen Verstärkers an die wenigstens eine Koppelelektrode angeschlossen ist.

Eine bevorzugte Weiterbildung sieht vor, dass der Mikrochip zum Modulieren bzw. Demodulieren von Daten mittels eines ersten digitalen Modulationsverfahrens, insbesondere On-Off Keying (OOK), binäre Frequenzumtastung (2-FSK) oder binäre Phasenumtastung (BPSK), und mittels eines vom ersten Modulationsverfahren verschiedenen, zweiten digitalen Modulationsverfahrens ausgebildet ist. Dies schafft die Möglichkeit zwei verschiedene Modulationsverfahren miteinander zu kombinieren, wobei die Vorteile beider Modulationsverfahren ausgenützt werden. Der Vorteil der hohen Reichweite und der Robustheit gegenüber Störungen des ersten Modulationsverfahrens, insbesondere On-Off Keying, binäre Frequenzumtastung (2-FSK) oder binäre Phasenumtastung (BPSK), wird mit dem Vorteil der hohen Übertragungsgeschwindigkeit des zweiten Modulationsverfahrens verbunden. Als zweites Modulationsverfahren wird hierbei bevorzugt Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK) oder Minimum Shift Keying (MSK), gewählt. Die Verwendung des beschriebenen zweiten Modulationsverfahrens reduziert zwar die mögliche Reichweite der Datenkommunikation, verkürzt aber auf Grund der deutlich erhöhten Datenübertragungsrate die Kommunikationszeit. Dies macht sich vor allem bei hohen Datenaufkommen bemerkbar, wie es bei Zutrittssystemen mit hohen sicherheitstechnischen Anforderungen der Fall ist. Insbesondere können die beschriebenen Modulationsverfahren so miteinander kombiniert werden, dass beim Annähern einer ersten Sende- und/oder Empfangseinrichtung an eine zweite Sende- und/oder Empfangseinrichtung zuerst ein einfaches und daher robustes Modulationsverfahren verwendet wird, und zwar solange eine schlechte kapazitive Kopplung vorliegt, und nach einer Verbesserung der kapazitiven Kopplung danach ein Modulationsverfahren mit einem höherem Datendurchsatz zum Einsatz gelangt.

Wie bereits erwähnt kann die Erfindung besonders vorteilhaft in der Schließtechnik verwendet werden. Obwohl die vorliegende Erfindung nicht auf bestimmte Typen von schließtechnischen Vorrichtungen beschränkt ist, werden die Vorteile der Erfindung besonders deutlich bei einer bevorzugten Ausbildung, bei der die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem Sperrglied zum wahlweisen Freigeben oder Sperren des Zutritts zusammenwirkt. Als Schließeinrichtung ist zum Beispiel ein elektrisch betätigbares oder freigebbares Türschloss (z.B. elektronischer Beschlag, elektronischer Schließzylinder oder elektronischer Rosettenbeschlag) oder dgl. zu verstehen. In diesem Zusammenhang ist es besonders vorteilhaft, wenn die schließtechnische Komponente oder die weitere schließtechnische Komponente ein elektronisches Medium oder Gerät mit einem Speicher für Identifikations- oder Zutrittsrechtsdaten, insbesondere ein elektronisches Schlüsselmedium ist.

Wie bereits erwähnt kann die Erfindung auch für die Übertragung von Messdaten angewendet werden. Die erste Sende- und/oder Empfangseinrichtung umfasst in diesem Fall eine Messdatenerfassungseinheit mit einem Datenübertragungsmodul zum Übertragen von Messdaten an die als Lese- und/oder Schreibeinheit ausgebildete zweite Sende- und/oder Empfangseinrichtung, wobei das Datenübertragungsmodul als wenigstens eine Koppelelektrode aufweisendes kapazitives Datenübertragungsmodul ausgebildet ist.

Für die Realisierung der kapazitiven Datenübertragung weist das Datenübertragungsmodul der Messdatenerfassungseinheit und der Lese- und/oder Schreibeinheit jeweils mindestens eine Koppelelektrode mit einer zugehörige Koppelkapazität für eine kapazitive Signalaus- bzw. -einkopplung auf. Beispielsweise ist die Koppelelektrode als eine leitende Fläche, insbesondere eine Kupferfläche oder metallische Fläche ausgebildet. Eine derartige Ausbildung der Datenübertragungsmodule ermöglicht eine Datenübertragung ohne eine galvanische Verbindung. Beide Komponenten, d.h. die Messdatenerfassungseinheit und die Lese- und/oder Schreibeinheit, sind bevorzugt jeweils geerdet. Über die Erdkapazitäten der Messdatenerfassungseinheit und der Lese- und/oder Schreibeinheit kann der Stromkreis geschlossen werden. Alternativ oder zusätzlich kann der Stromkreis durch eine direkte kapazitive Kopplung zwischen den Masse-Elektroden geschlossen werden.

Die kapazitive Datenübertragung funktioniert hierbei bevorzugt so, dass das Datenübertragungsmodul der Messdatenerfassungseinheit Mittel zur Erzeugung eines im Wesentlichen elektrischen Nahfelds aufweist, über welches die Messdaten ausgesendet werden, sodass sich bei Berührung der Messdatenerfassungseinheit oder bei Annäherung an die Messdatenerfassungseinheit durch die Lese- und/oder Schreibeinheit ein Wechselstromkreis schließt und ein Datensignal übermittelt werden kann, welches von dem Datenübertragungsmodul der Lese- und/oder Schreibeinheit erfasst wird.

Eine für die kapazitive Datenübertragung verwendete Koppelelektrode des Datenübertragungsmoduls kann an einer Außenfläche eines Gehäuses der Messdatenerfassungseinheit bzw. der Lese- und/oder Schreibeinheit angeordnet sein. Bevorzugt ist die Koppelelektrode als leitende Beschichtung ausgebildet.

Die Messdatenerfassungseinheit weist einen Sensor auf, mit dem die zu messende analoge Größe erfasst wird. Der Sensor kann hierbei beispielswiese zur Erfassung einer Durchflussgeschwindigkeit, Wärmemenge, Temperatur, Lösungskonzentration (z.B. Zuckergehalt, Alkoholgehalt, Säuregehalt) oder eines Drucks ausgebildet sein. Bevorzugt kommt eine Messdatenerfassungseinheit zum Einsatz, die Befestigungsmittel zum Befestigen der Messdatenerfassungseinheit an einem elektrisch leitenden Leitungsrohr umfasst. Dies ermöglicht es, den Sensor so anzuordnen, dass dieser in das Rohrinnere hineinragt oder mit dem Rohrinneren in Verbindung steht, wobei der Sensor z.B. vom zu messenden Medium umströmt wird. Die zu messenden Medien können fest (z.B. Kies), staubförmig (z.B. Mehl mit Luft), flüssig und/oder gasförmig sein.

Allgemein ist zu erwähnen, dass die Messdatenerfassungseinheit eine optische Anzeige aufweisen kann, auf der z.B. Messdaten oder Statusinformationen angezeigt werden können. Die Lese- und/oder Schreibeinheit kann lanzenförmig ausgebildet sein, damit der Benutzer leichter an die Messdatenerfassungseinheit herankommen kann. Die Lanzenspitze ist dabei vorteilhafterweise mit einer Koppelelektrode ausgestattet.

Um eine sichere Datenübertragung zu ermöglichen (z.B. Handshake oder Verschlüsselung), ist bevorzugt vorgesehen, dass sowohl die Messdatenerfassungseinheit als auch die Lese- und/oder Schreibeinheit Daten senden und empfangen können, sodass eine bidirektionale Datenübertragung stattfindet.

Die Lese- und/oder Schreibeinheit kann eine Schnittstelle zur Datenweitergabe aufweisen. Diese Schnittstelle kann z.B. als LAN-, WLan oder 6LoWPAN Schnittstelle oder als Schnittstelle für ein Mess-, Installations-, und Gebäudebussystem ausgebildet sein. Die Messdaten können in einer weiteren bevorzugten Ausführung in elektronischen Datenverarbeitungssystemen gespeichert und z.B. über einen eingeschränkten Zugriff vom Internet aus abgefragt werden.

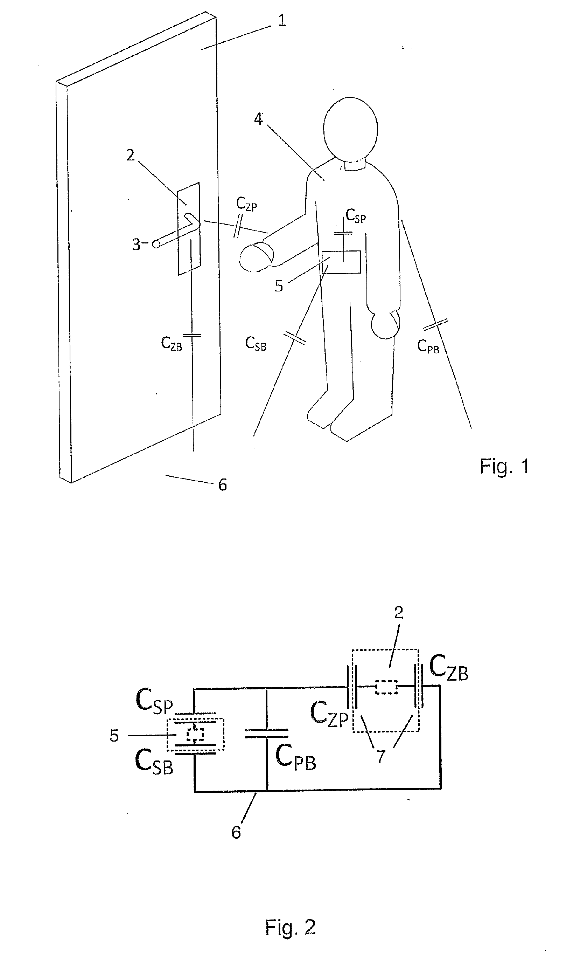

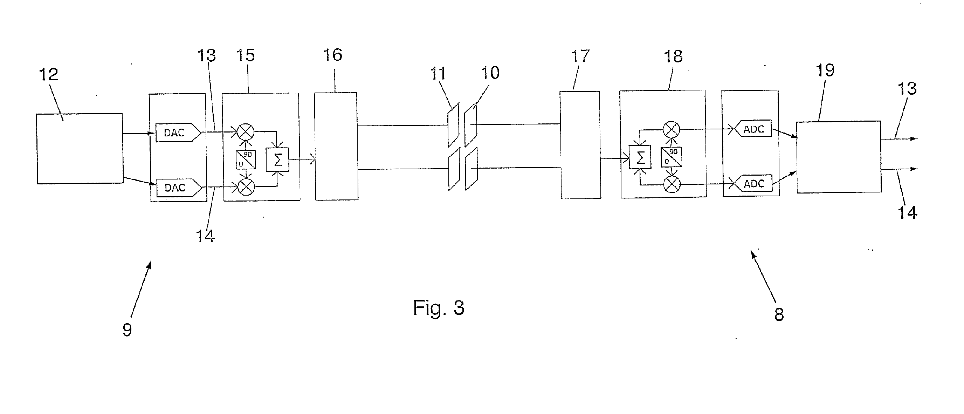

Die Erfindung wird nachfolgend anhand eines in der Zeichnung dargestellten Ausführungsbeispiels näher erläutert. In dieser zeigen Fig. 1 eine schematische Darstellung der Funktionsweise einer mit kapazitiver Kopplung arbeitenden Zutrittskontrollvorrichtung, Fig. 2 ein vereinfachtes Ersatzschaltbild der Ausbildung gemäß Fig. 1 und Fig. 3 ein Blockschaltbild eines Datenübertragungssystems.

In Fig. 1 ist schematisch eine Tür mit einer zum Türdrücker greifenden Person sowie die einzelnen Koppelkapazitäten dargestellt. Die Tür ist mit 1 bezeichnet und weist eine Zutrittskontrollvorrichtung 2 mit einem als Drücker ausgebildeten Betätigungsglied 3 auf. Die Person 4 trägt einen elektronischen Schlüssel 5, welcher beispielsweise in einer Hosentasche eingesteckt sein kann. Der elektronische Schlüssel 5 erzeugt hierbei ein im Wesentlichen elektrisches Feld mit einer Trägerfrequenz, auf welches Identifikationsdaten aufmoduliert werden. Das elektrische Signal wird über die Körperoberfläche der Person 4 und in der Folge an einen Empfänger der Zutrittskontrollvorrichtung 2 weitergeleitet. Dabei weist der elektronische Schlüssel 5 eine Kapazität CSB gegen den Boden 6 auf. Am Übergang zwischen dem elektronischen Schlüssel 5 und der Person 4 ist eine Koppelkapazität CSP zu beobachten. Weiters tritt Verlustkapazität CPB zwischen der Person 4 und dem Boden 6 auf. Schließlich weist die Zutrittskontrollvorrichtung 2 eine Zylinderkapazität CZB gegen den Boden auf.

Das entsprechende vereinfachte Ersatzschaltbild ist in Fig.2 dargestellt, wobei wiederum die beschriebenen Kapazitäten angeführt sind. Dabei bildet CPB alle parasitären Kapazitäten ab, welche nichts zur Koppelung zwischen Empfänger und Sender beitragen. CSB bildet die Kapazitäten nach, welche als Summe für die kapazitive Koppelung der Sendeelektrode gegen den Boden zur Verfügung steht. CSP bildet die Kapazitäten nach, welche als Summe für die kapazitive Koppelung der Person 4 zur zweiten Elektrode zur Verfügung steht. CZB bildet die Kapazitäten nach, welche als Summe für die kapazitive Koppelung von der Zutrittskontrollvorrichtung bzw. deren elektronischem Schließzylinder oder elektronischem Beschlag zum Boden zur Verfügung steht. Dabei ist in der Fig.2 die Zutrittskontrollvorrichtung wiederum mit 2 bezeichnet und weist einen Empfangskondensator 7 auf.

Fig. 3 zeigt ein vereinfachtes Schaltbild eines Datenübertragungsmoduls 9 des elektronischen Schlüssel 5 samt Koppelelektrode 11 und eines Datenübertragungsmoduls 8 der Zutrittskontrollvorrichtung 2 samt Koppelelektrode 10 des Empfangskondensators 7. Das Datenübertragungsmodul 8 bzw. 9 umfasst einen Mikrochip 15 bzw. 18 mit einer Modulations- und/oder Demodulationsschaltung. Anhand dieses Ausführungsbeispiels wird eine Quadraturmodulation erläutert. Wie ersichtlich wird senderseitig ein digitaler Signalprozessor bzw. ein Mikrocontroller 12 eingesetzt, der die Modulation der Nutzdaten übernimmt. Diese digitalen Werte werden mit Hilfe eines Digital-Analog-Wandlers (DAC) in ein analoges Signal umgewandelt und gefiltert und als Basisbandsignale 13,14 an den Quadraturmodulator 15 weitergegeben. Dieser Modulator 15 moduliert das Datensignal auf ein Trägersignal und steuert die Koppelelektroden 11 an. Zwischen den Koppelelektroden 11 und dem Modulator 15 liegen noch ein Ausgangsverstärker und ein Filter (zusammen 16). Empfängerseitig wird zunächst das an den Koppelelektroden 10 anliegende Signal gefiltert und mittels eines rauscharmen Verstärkers 17 verstärkt und mittels des Quadraturdemodulators 18 auf das Basisband heruntergemischt. Die Basisbandsignale werden über einen Analog-To-Digital-Converter (ADC) auf ein digitales Signal umgewandelt und stehen dem digitalen Signalprozessor bzw. Mikrocontroller 19 zur Demodulation zur Verfügung.

## Patentansprüche

1. Datenübertragungsvorrichtung umfassend wenigstens eine erste Sende- und/oder Empfangseinrichtung, um eine Datenübermittlung zwischen der Sende- und/oder Empfangseinrichtung und einer zweiten Sende- und/oder Empfangseinrichtung zu ermöglichen, wobei die erste Sende-und/oder Empfangseinrichtung ein wenigstens eine Koppelelektrode (11) aufweisendes kapazitives Datenübertragungsmodul (9) aufweist, sodass die Datenübermittlung über eine kapazitive Kopplung zwischen der ersten Sende- und/oder Empfangseinrichtung und der zweiten Sende-und/oder Empfangseinrichtung erfolgen kann, wobei das Datenübertragungsmodul (9) wenigstens eine Modulations- und/oder Demodulationsschaltung zum Aufmodulieren von Daten auf ein Trägersignal bzw. zum Demodulieren von Daten aus einem Signal aufweist, wobei das kapazitive Datenübertragungsmodul (9) wenigstens einen die Modulations- und/oder Demodulationsschaltung aufweisenden Mikrochip (15) umfasst, der zum Modulieren bzw. Demodulieren von Daten mittels wenigstens eines vorzugsweise digitalen Modulationsverfahrens ausgebildet ist, **dadurch gekennzeichnet, dass** der Mikrochip (15) ein für die drahtgebundene Datenübertragung, insbesondere eine Datenübertragung über eine Trägerfrequenzanlage für Stromnetze (powerline communication), oder für Funkanwendungen, insbesondere Radaranwendungen ausgebildeter Datenübertragungs-Mikrochip ist.

2. Datenübertragungsvorrichtung nach Anspruch 1, **dadurch gekennzeichnet, dass** der Mikrochip (15) unter Zwischenschaltung (16) eines rauscharmen Verstärkers an die wenigstens eine Koppelelektrode (11) angeschlossen ist.

3. Datenübertragungsvorrichtung nach Anspruch 1 oder 2, **dadurch gekennzeichnet, dass** der Mikrochip (15) zum Modulieren bzw. Demodulieren von Daten mittels eines ersten digitalen Modulationsverfahrens, insbesondere On-Off Keying (OOK), binäre Frequenzumtastung (2-FSK) oder binäre Phasenumtastung (BPSK), und mittels eines vom ersten Modulationsverfahren verschiedenen, zweiten digitalen Modulationsverfahrens ausgebildet ist.

4. Datenübertragungsvorrichtung nach Anspruch 3, **dadurch gekennzeichnet, dass** das zweite Modulationsverfahren Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), binäre Phasenumtastung (BPSK), Quadraturphasenumtastung (QPSK), 8-Phasenumtastung (8-PSK), binäre Frequenzumtastung (2-FSK), Gauß'sche Frequenzumtastung (GFSK), Discrete Multitone Transmission (DMT), Trellis-Code-Modulation (TCM), VSB-Modulation (Vestigial Sideband Modulation), ein orthogonales Frequenzmultiplexverfahren (OFDM) oder Minimum Shift Keying (MSK), ist.

5. Datenübertragungsvorrichtung nach einem der Ansprüche 1 bis 4, die als Zutrittskontrollvorrichtung ausgebildet ist, wobei die erste Sende- und/oder Empfangseinrichtung als schließtechnische Komponente und die zweite Sende- und/oder Empfangseinrichtung als weitere schließtechnische Komponente ausgebildet ist.

6. Datenübertragungsvorrichtung nach Anspruch 5, **dadurch gekennzeichnet, dass** die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem verlagerbaren Glied zum wahlweisen Freigeben oder Sperren des Zutritts zusammenwirkt.

7. Datenübertragungsvorrichtung nach Anspruch 5 oder 6, **dadurch gekennzeichnet, dass** die schließtechnische Komponente oder die weitere schließtechnische Komponente ein elektronisches Medium oder Gerät mit einem Speicher für Identifikations- oder Zutrittsrechtsdaten ist.

8. Datenübertragungsvorrichtung nach einem der Ansprüche 1 bis 5, **dadurch gekennzeichnet, dass** die erste Sende- und/oder Empfangseinrichtung eine Messdatenerfassungseinheit mit einem Datenübertragungsmodul zum Übertragen von Messdaten an die als Lese- und/oder Schreibeinheit ausgebildete zweite Sende- und/oder Empfangseinrichtung umfasst, wobei das Datenübertragungsmodul als wenigstens eine Koppelelektrode aufweisendes kapazitives Datenübertragungsmodul ausgebildet ist.

9. Datenübertragungsvorrichtung nach einem der Ansprüche 1 bis 8, **dadurch gekennzeichnet, dass** der Mikrochip ein Chip des Typs ST7590 von ST Microelectronics, SM2400 von Semitech, ATPL220A von ATMEL, AD8333 von Analog Devices, LTC5598 von Linear Technology, LTC5584 von Linear Technology, LT5517 von Linear Technology, UPC27766GR von NEC oder CMX973 von CML Microcircuits ist.
